# EUROPÄISCHE PATENTSCHRIFT

(11) **EP 1 338 476 B1**
(45) Veröffentlichungstag und Bekanntmachung des Hinweises auf die Patenterteilung: **22.12.2004**
(21) Anmeldenummer: 03001472.4
(22) Anmeldetag: 23.01.2003
(51) Int. Cl.: B60R 13/04, F16B 5/12

(54) **Verbindungselement zum fluchtenden Verbinden von zwei aneinander gesetzten Leisten**
Connecting element for flushingly connecting two abutting strips
Elément de fixation en alignement de deux profilés aboutés

(30) Priorität: 25.02.2002 DE 10208060
(43) Veröffentlichungstag der Anmeldung: 27.08.2003
(73) Patentinhaber: Dr.Ing. h.c.F. Porsche Aktiengesellschaft, 70435 Stuttgart (DE)
(72) Erfinder: Neidlein, Harald, 70197 Stuttgart (DE)

(56) Entgegenhaltungen:
- DE-A- 19 806 531
- DE-C- 4 126 442
- US-A- 4 726 614
- US-A- 4 969 674

## Beschreibung

Die Erfindung bezieht sich auf ein Verbindungselement zum fluchtenden Verbinden von zwei aneinander gesetzten Leisten nach dem Oberbegriff des Anspruchs 1.

Aus der DE 198 06 531 A1 ist ein Verbindungselement zum fluchtenden Verbinden von zwei aneinander gesetzten Leisten bekannt, das in Längsnuten der beiden Leisten eingeschoben wird und somit die zu verbindenden Leisten gegeneinander ausrichten. Desweiteren ist aus der DE 41 26 442 C1 eine Verbindungsvorrichtung für Leisten eines Kraftfahrzeugs bekannt, wobei im Verbindungselement Rastaufnahmen für ein Halteelement vorgesehen sind.

Aufgabe der Erfindung ist es, über ein Verbindungselement für zwei Leisten eine fluchtgenaue Befestigung dieser Leisten am Kraftfahrzeugaufbau zu schaffen, wobei das Verbindungselement in einfacher Weise eine Montage der Leisten zueinander ohne Nachjustierung gewährleisten soll.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß durch das Verbindungselement im wesentlichen bestehend aus einem Rasthaken und einer Rasthakenaufnahme eine einfache Montagehilfe zur fluchtenden Ausrichtung von Leisten am Fahrzeug erreicht wird.

Insbesondere ist in einer Leiste als erstes Verbindungsglied ein Rasthaken gehalten, der korrespondierend mit einem zweiten als Rasthakenaufnahme ausgebildeten Verbindungsteil in der zweiten Leiste angeordnet ist. Die Rasthakenaufnahme weist in Einsteckrichtung des Rasthakens einen vornliegenden Führungsabschnitt für den Rasthaken auf. Durch die beiden Verbindungselemente, wobei jeweils ein Verbindungselement in jeder Leiste angeordnet ist, wird ein Ausrichten der Leisten und ein Verbinden durch eine einfache Verfahrensweise selbsttätig erzielt.

Der Rasthaken ist mit einem Stiel in einer Längsnut der einen Leiste gehalten und am freien Ende ist der Rasthaken angeordnet, der über den rundum geschlossenen Führungsabschnitt zwangsgeführt in die Rasthakenaufnahme für die weitere Leiste einsetzbar ist. Durch den Führungsabschnitt wird eine problemlose Einfädelung des Rasthakens in die Rasthakenaufnahme sowie eine unmittelbare Zuführung vom Rasthaken in die Aufnahme erzielt. Insbesondere ist der Führungsabschnitt der Rasthakenaufnahme als Schwalbenschwanz ausgebildet und der Stiel des Rasthakens weist einen mit dieser Führung korrespondierenden Abschnitt mit einem Schwalbenschwanz auf, der im Verbindungszustand im Führungsabschnitt angeordnet ist.

Durch diesen speziell ausgebildeten Führungsabschnitt in der Rasthakenaufnahme sowie einem entsprechend ausgebildeten Abschnitt am Stiel des Rasthakens ist eine Zwangsführung beim Verbindungsvorgang gewährleistet und im Verbindungszustand wird ein sicherer und toleranzgenauer Halt der Leisten zueinander erzielt.

Die Verbindung der Rasthakenaufnahme mit der Leiste erfolgt über Hakenelemente, die in eine entsprechende Ausnehmung der Leiste eingeklipst gehalten werden und wenigstens ein weiteres Halteelement ist am Führungsabschnitt vorgesehen, das sich vorderseitig der Leiste abstützt und verhakt. Diese Verbindungsart der Rasthakenaufnahme erfolgt ohne zusätzliche Schraubmittel in einfacher Weise.

Durch die Zuordnung des Rasthakens zur Rasthakenaufnahme wird ohne Nacharbeit beim Zusammenstecken der Leisten eine niveaugleiche Leistenaußenfläche ohne Spalt erzielt.

Ein Ausführungsbeispiel der Erfindung ist in den Zeichnungen dargestellt und wird im folgenden näher beschrieben.

Es zeigen
- Fig. 1: eine Ansicht auf eine Seitenwand eines Fahrzeugs mit einer vorderen Leiste bzw. einer vorderen Abdeckleiste und einer hinteren Abdeckleiste in Bezug auf eine Fahrzeugsäule,
- Fig. 2: eine schaubildliche Darstellung des Verbindungselements im wesentlichen bestehend aus einem Rasthaken und einer Rasthakenaufnahme,
- Fig. 3: einen Schnitt durch das Verbindungselement in Pfeilrichtung Z gem. Fig. 1 gesehen und
- Fig. 4: einen Schnitt durch das Verbindungselement nach der Linie IV-IV der Fig. 3.

Zum fluchtenden Verbinden von zwei Leisten 1, 2, insbesondere von Abdeck- und/oder Zierleisten eines Kraftfahrzeugs, die beispielsweise zwischen einem Dach 3 und einem Türrahmen 4 bzw. einem Fensterrahmen 5 angeordnet sind, dient ein Verbindungselement 6. Dieses umfaßt im wesentlichen einen Rasthaken 7 in der Leiste 1 und eine Rasthakenaufnahme 8 in der weiteren Leiste 2. Diese Teile 7 und 8 werden beim Zusammenschieben der Leisten 1 und 2 auf Stoß miteinander selbsttätig verhakt und verbunden. In der Leiste 1 ist als erstes Verbindungselement in einer Längsnut 9 der Rasthaken 7 über einen Stiel 14 gehalten und in der Leiste 2 ist als zweites Verbindungselement die Rasthakenaufnahme 8 mit Rasthaken 16 in einer Ausnehmung 10 über Hakenelemente 11 und 11a befestigt.

Die Rasthakenaufnahme 8 umfaßt am vorderen freien Ende 12 einen rundum geschlossenen Führungsabschnitt 13, durch den der Rasthaken 7 in die Aufnahme 8 einführbar ist, der korrespondierend zu diesem Abschnitt 13 einen mit diesem korrespondierenden Abschnitt 15 am Stiel 14 aufweist. Der Abschnitt 13 bildet eine Schwalbenschwanzführung 13a und der Abschnitt 15 einen Schwalbenschwanz 15a, so daß eine exakte Zwangsführung gegeben ist.

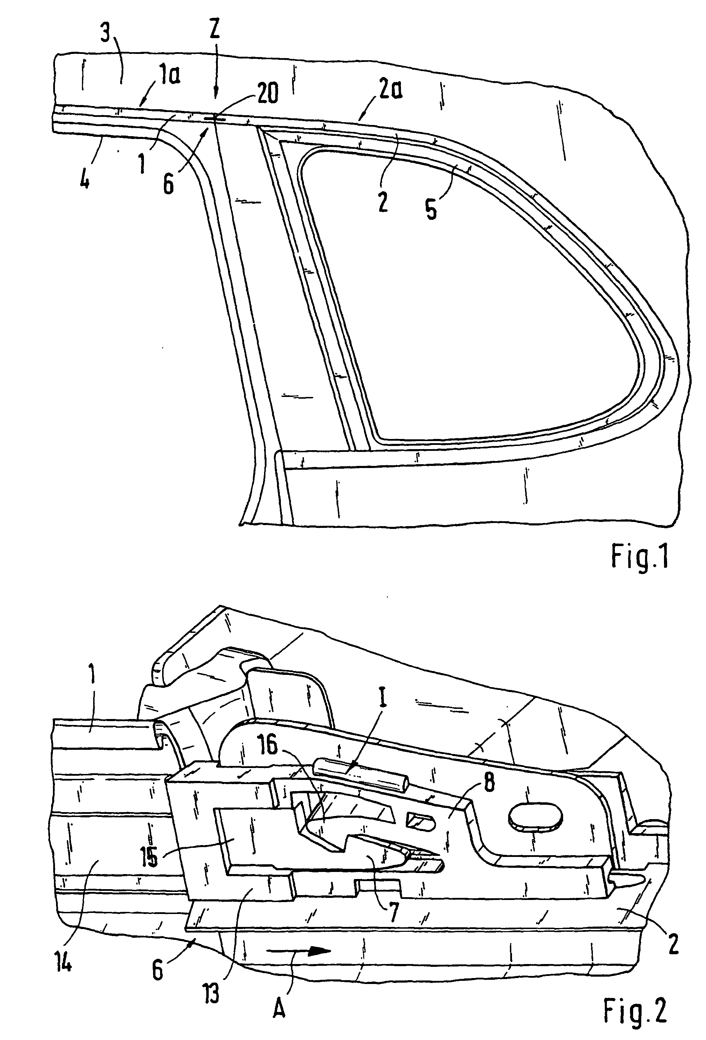

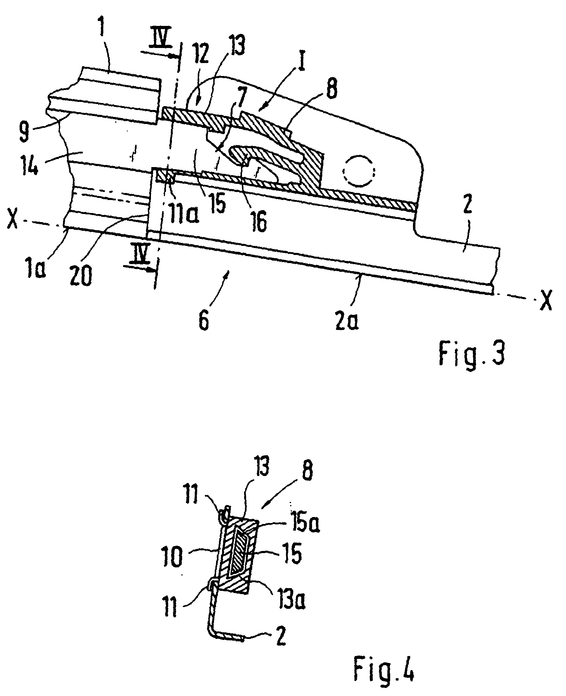

Wie in den Fig. 2 und 3 näher gezeigt, hintergreift nach einem Zusammenschieben der Leisten 1 und 2 auf Stoß in der Verbindungsstellung I der Rasthaken 7 den gegenüberstehenden Rasthaken 16 in der Rasthakenaufnahme 8, so daß eine feste Verbindung der beiden Leisten 1 und 2 erfolgt. Der Rasthaken 16 ist hierzu federnd ausgeführt. Durch die genaue Ausrichtung der beiden Rasthaken 7 und 16 zueinander können die Außenflächen 1a und 2a der Leisten 1 und 2 niveaugleich in einer Ebene X-X ausgerichtet werden und zudem werden die Leisten 1 und 2 ohne Spalte 20 zueinander gehalten.

## Patentansprüche

1. Verbindungselement zum fluchtenden Verbinden von zwei aneinander gesetzten Leisten, insbesondere Zier- oder Abdeckleisten eines Kraftfahrzeugs, wobei in jeder Leiste ein Verbindungsteil angeordnet ist, die miteinander verrastbar sind, **dadurch gekennzeichnet, daß** in einer Leiste (1) als erstes Verbindungsteil ein Rasthaken (7) gehalten ist, der korrespondierend mit einem zweiten als Rasthakenaufnahme (8) ausgebildeten Verbindungsteil in der zweiten Leiste (2) angeordnet ist und die Rasthakenaufnahme (8) in Einsteckrichtung (A) des Rasthakens (7) einen vornliegenden Führungsabschnitt (13) für den Rasthaken (7) aufweist.

2. Verbindungselement nach Anspruch 1, **dadurch gekennzeichnet, daß** der Rasthaken (7) mit einem Stiel (14) in einer Längsnut (9) der einen Leiste (1) gehalten ist und an seinem freien Ende (12) der Rasthaken (7) angeordnet ist, der über den rundum geschlossenen Führungsabschnitt (13) zwangsgeführt in die Rasthakenaufnahme (8) für die zweite Leiste (2) einsetzbar ist.

3. Verbindungselement nach den Ansprüchen 1 oder 2, **dadurch gekennzeichnet, daß** der Führungsabschnitt (13) der Rasthakenaufnahme (8) als Schwalbenschwanzführung (13a) ausgebildet ist und der Stiel (14) einen mit dieser Führung (13a) korrespondierenden Abschnitt (15) mit einem Schwalbenschwanz (15a) aufweist, welcher im Verbindungszustand (I) im Führungsabschnitt (13) angeordnet ist.

4. Verbindungselement nach den Ansprüchen 1, 2 oder 3, **dadurch gekennzeichnet, daß** die Rasthakenaufnahme (8) über Hakenelemente (11) in einer Ausnehmung (10) der zweiten Leiste (2) eingeklipst gehalten ist und wenigstens ein weiteres Hakenelement (11a) am Führungsabschnitt (13) vorgesehen ist, das sich vorderseitig der Leiste (2) abstützt.

5. Verbindungselement nach den Ansprüchen 1, 2, 3 oder 4, **dadurch gekennzeichnet, daß** die Rasthakenaufnahme (8) einen dem Rasthaken (7) gegenüberstehenden Rasthaken (16) umfaßt, der in der Verbindungsstellung (I) die beiden gegenüberstehenden Sichtflächen (1a, 2a) der Leisten (1, 2) niveaugleich zueinander einstellt.

## Claims

1. A connecting element for connecting in an aligned manner two mutually adjoining strips, in particular ornamental or cover strips of a motor vehicle, wherein a connecting part is arranged in each strip, the said connecting parts being lockable to one another, **characterized in that** a catch hook (7) is held as a first connecting part in a strip (1) and is arranged in the second strip (2) in a manner corresponding to a second connecting part constructed in the form of a catch-hook receiving means (8), and, in the insertion direction (A) of the catch hook (7), the catch-hook receiving means (8) has a guiding portion (13) situated at the front for the catch hook (7).

2. A connecting element according to Claim 1, **characterized in that** the catch hook (7) is held by a stem (14) in a longitudinal groove (9) in one strip (1), and the catch hook (7) is arranged at the free end (12) of the said stem (14) and can be inserted in a forcibly guided manner into the catch-hook receiving means (8) for the second strip (2) by way of the guiding portion (13) which is closed all round.

3. A connecting element according to Claims 1 or 2, **characterized in that** the guiding portion (13) of the catch-hook receiving means (8) is constructed in the form of a dovetail guide (13a), and the stem (14) has a portion (15) - corresponding to the said guide (13a) - with a dovetail (15a) which is arranged in the guiding portion (13) in the connected state (I).

4. A connecting element according to Claims 1, 2 or 3, **characterized in that** the catch-hook receiving means (8) is held in a recess (10) in the second strip (2) in a clipped-in manner by way of hook elements (11), and at least one further hook element (11a), which is supported on the front of the strip (2), is provided on the guiding portion (13).

5. A connecting element according to Claims 1, 2, 3 or 4, **characterized in that** the catch-hook receiving means (8) surrounds a catch hook (16) which is opposite the catch hook (7) and which, in the connected state (I), sets the two opposed visible surfaces (1a, 2a) of the strips (1, 2) at the same level with respect to each other.

## Revendications

1. Elément de liaison pour relier de manière alignée deux baguettes placées l'une contre l'autre, en particulier des baguettes d'enjoliveurs ou de recouvrement d'un véhicule automobile, une pièce de liaison étant disposée dans chaque baguette lesquelles peuvent s'accrocher les unes aux autres, **caractérisé en ce que** dans une baguette (1) est maintenu, comme première pièce de liaison, un crochet à encliquetage (7) qui est disposé en correspondance avec une deuxième pièce de liaison réalisée comme logement (8) pour crochet d'encliquetage, dans la deuxième baguette (2), et le logement (8) pour crochet d'encliquetage comporte, dans le sens d'enfoncement (A) du crochet d'encliquetage (7), un segment de guidage (13) situé à l'avant pour le crochet d'encliquetage (7).

2. Elément de liaison selon la revendication 1, **caractérisé en ce que** le crochet d'encliquetage (7) est maintenu par une tige (14) dans une rainure longitudinale (9) d'une baguette (1) et, à son extrémité libre (12), est disposé le crochet d'encliquetage (7) qui peut être inséré, guidé forcé sur le segment de guidage (13) fermé tout autour, dans le logement (8) pour crochet d'encliquetage de la deuxième baguette (2).

3. Elément de liaison selon les revendications 1 ou 2, **caractérisé en ce que** le segment de guidage (13) du logement (8) pour crochet d'encliquetage est réalisé en tant que guidage à queue d'aronde (13a), et la tige (14) comporte un segment (15) correspondant à ce guidage (13a), avec une queue d'aronde (15a), lequel est disposé, à l'état de liaison (I), dans le segment de guidage (13).

4. Elément de liaison selon les revendications 1, 2 ou 3, **caractérisé en ce que** le logement (8) pour crochet d'encliquetage est maintenu clipsé, par des éléments à crochet (11), dans un évidement (10) de la deuxième baguette (2), et il est prévu au moins un autre élément à crochet (11a) sur le segment de guidage (13) qui prend appui sur le côté avant de la baguette (2).

5. Elément de liaison selon les revendications 1, 2, 3 ou 4, **caractérisé en ce que** le logement (8) pour crochet d'encliquetage comprend un crochet d'encliquetage (16) opposé au crochet d'encliquetage (7), qui, dans la position de liaison I, règle à un même niveau l'une par rapport à l'autre les deux surfaces visibles (1a, 2a) opposées des baguettes (1, 2).
